# EUROPEAN PATENT APPLICATION

(11) **EP 4 345 964 A1**
(43) Date of publication of application: **03.04.2024**
(21) Application number: 23194742.5
(22) Date of filing: 31.08.2023
(51) Int. Cl.: H01M 10/04, B65H 20/16

(54) **WEB CONVEYING DEVICE**

(30) Priority: 28.09.2022 JP 2022155582
(71) Applicant: Komatsu NTC Ltd., Nanto-City, Toyama Toyama 939-1595 (JP)
(72) Inventor: KIYOTO, Satoshi, Toyama, 939-1595 (JP); MORISHITA, Shinichiro, Toyama, 939-1595 (JP)
(74) Representative: Murgitroyd & Company

(57) **Abstract**

A web conveying device (100; 200) includes: a chain (7) engaging with a sprocket (6) and driven in a conveying direction (A) of a web (1); and a web guiding member (10) having a front edge (1a) of the web (1) threaded thereinto and driven by the chain (7) to guide the web (1) into a gap. Cam roller members (32) are provided at both ends of the web guiding member (10) and are abutted on a cam member (34). This moves a web pressing member (20; 120) away from an outer periphery (5f), to allow the web pressing member (10) to be inserted into the enlarged gap without interference.

## Description

### Field of the Invention

The present invention relates to a web conveying device.

### Background

A tab forming apparatus has been known as a web conveying device used for manufacturing an electrode of a battery, to convey a web as a workpiece so as to have the web processed with laser beams and the like. Japanese Patent Application Publication No. 2019-26466 A, for example, discloses using a web guiding member to extend a web beforehand from upstream to downstream in a conveying device. Each guide roller desirably has a web pressing member provided to prevent the web, in a thin foil form, from leaving an outer periphery thereof due to a change in conveying direction of the web.

### Summary of the Invention

In such a conventional web conveying device, a gap between the web pressing member and an outer periphery of the guide roller is set to have a size to allow the web to extend therethrough. Accordingly, when the web guiding member, having a larger size in a depth direction than the web, passes through the gap, the web pressing member needs to be removed to enlarge the gap so as to avoid interfering with the web guiding member. A conventional web conveying device uses a driving force of an actuator, such as an air cylinder, to move the web pressing member away from the outer periphery of the guide roller, when the web guiding member has approached the gap, for example, to enlarge the gap.

However, a sensor, configured to detect that the web guiding member is approaching the web pressing member, and the actuator need to be used to timely move the web pressing member. The device has thus required further improvement in order to prevent parts from increasing in number to reduce manufacturing costs.

The present disclosure is then intended to provide a web conveying device to retreat one or more web pressing members with a simple structure to reduce manufacturing costs.

A web conveying device of the present disclosure includes: a guide roller to support and guide a web in a strip shape; a web pressing member to allow the web to extend through a gap between itself and an outer periphery of the guide roller; and a sprocket attached to a rotary shaft of the guide roller. In addition, the web conveying device includes: a chain engaging with the sprocket and driven in a conveying direction of the web; and a web guiding member having a front edge of the web threaded thereinto and driven by the chain to guide the web into the gap. Further, the web conveying device includes: a cam roller member attached to the web guiding member; and a cam member abutted on the cam roller to move the web pressing member away from the outer periphery.

The present disclosure provides a web conveying device to retreat one or more web pressing members with a simple structure to reduce manufacturing costs.

### Brief Description of the Drawings

FIG. 1 is a schematic side view of a tab forming apparatus, including a web conveying device according to a first embodiment, to illustrate an overall configuration;
FIG. 2 is a perspective view of a guide roller, as viewed in an arrowed direction II in FIG. 1, to illustrate the web conveying device with a web pressing member common in a first and second conveyers;
FIG. 3 is a perspective view of the tab forming apparatus, including the web conveying device, processing a tab on a hem of the web with laser beams;
FIG. 4 is an enlarged perspective view of the web pressing member and an interlocking mechanism of the web conveying device;
FIG. 5 is a plan view of the web conveying device, with a tab protruding from the hem of the web being pressed by the web pressing member;
FIG. 6 is a plan view of the guide roller of the web conveying device, as viewed from above in an arrowed direction VI in FIG. 2;
FIG. 7 is a front view of the guide roller of the web conveying device, as viewed from front in an arrowed direction VII in FIG. 2;
FIG. 8 is a cross-sectional view, to show relationships, of the guide roller, web pressing member, and a cam member of the web conveying device, taken along a line VIII-VIII in FIG. 7;
FIG. 9 is a side view, to show relationships, of the web guiding member, guide roller, and interlocking mechanism of the web conveying device, as viewed in an arrowed direction IX in FIG. 7;
FIG. 10A is a side view of the web conveying device, with a cam roller member prior to abutting on the cam member, to illustrate operation of the interlocking mechanism moving the web pressing member away from an outer periphery of the guide roller;
FIG. 10B is a side view of the web conveying device, with the cam roller member abutting on the cam member;
FIG. 10C is a side view of the web conveying device, with the cam roller member flipping up and swing the cam member so as to be moved away from the outer periphery;
FIG. 11A is a side view of the web conveying device, with a rod-shaped member passing through a gap enlarged due to the web pressing member having been moved away from the outer periphery of the guide roller, to illustrate the web pressing member, flipped up though action of the interlocking mechanism, returning toward the outer periphery;
FIG. 11B is a side view of the web conveying device, with the cam roller member abutting on an extended surface of the cam member;
FIG. 11C is a side view of the web conveying device, with the cam roller member positioned at an end of the extended surface;
FIG. 12 is a perspective view of the web conveying device, with the web guiding member being moved in the second conveyer toward the guide roller in accordance with a chain being moved;
FIG. 13 is a perspective view of the web conveying device, with the web guiding member having caused the web to extend through the gap between the guide roller and the web pressing member;
FIG. 14 is a perspective view of the web conveying device according to a second embodiment, to illustrate a web pressing member in substantially full width, with the web guiding member being moved toward the guide roller and the web pressing member in accordance with the chain being moved; and
FIG. 15 is a side view of the web conveying device according to the second embodiment, to illustrate the guide roller, the web pressing member, and the cam member.

### Detailed Description of Preferred Embodiments

Hereinafter, a description is given of embodiments of a web conveying device according to the present disclosure, with reference to the drawings as required. Note that when an up-down direction and a right-left direction are indicated in the present disclosure, these directions are basically set to those derived from a conveying direction of a web being defined as a front-rear direction, unless otherwise specified. A "right-left direction" of a web 1 is synonymous with a "width direction" and "a pair of right and left" components is synonymous with a pair of right and left components with respect to a longitudinal center line of the web 1. The same components are each denoted by an identical reference sign, and duplicate descriptions are avoided.

### First Embodiment

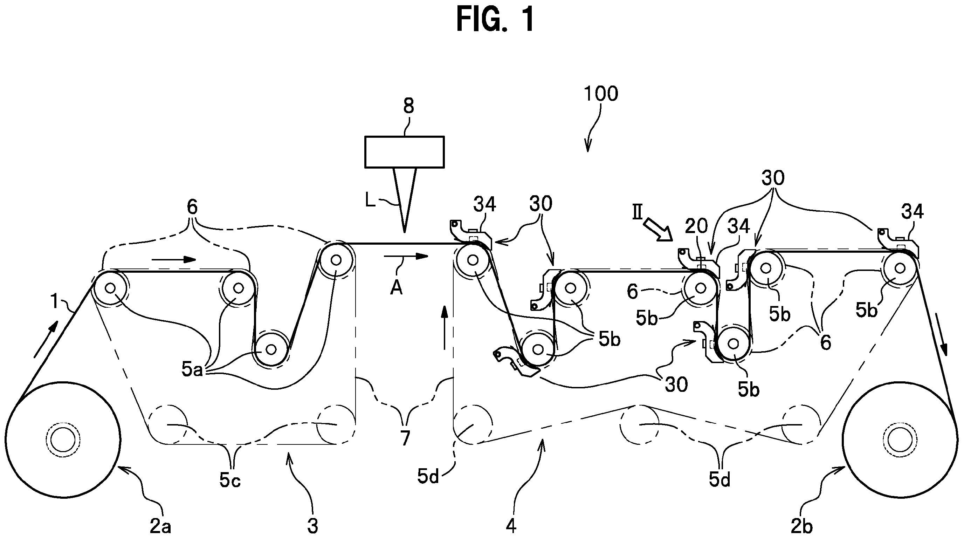

FIG. 1 illustrates an overall configuration of a tabbed electrode sheet manufacturing apparatus including a first embodiment of a web conveying device 100 according to the present disclosure. The tabbed electrode sheet manufacturing apparatus manufactures a tabbed electrode sheet used such as for a lithium secondary battery or lithium capacitor, and an electric capacitor. The tabbed electrode sheet manufacturing apparatus includes a web conveying device 100, a feeder 2a, a winder 2b, and a laser processor 8. The feeder 2a has strip electrodes, to be processed as a tabbed electrode sheet, set thereon as the rolled web 1. The winder 2b has a winder shaft to be rotatably driven so as to wind the processed web 1 into a roll.

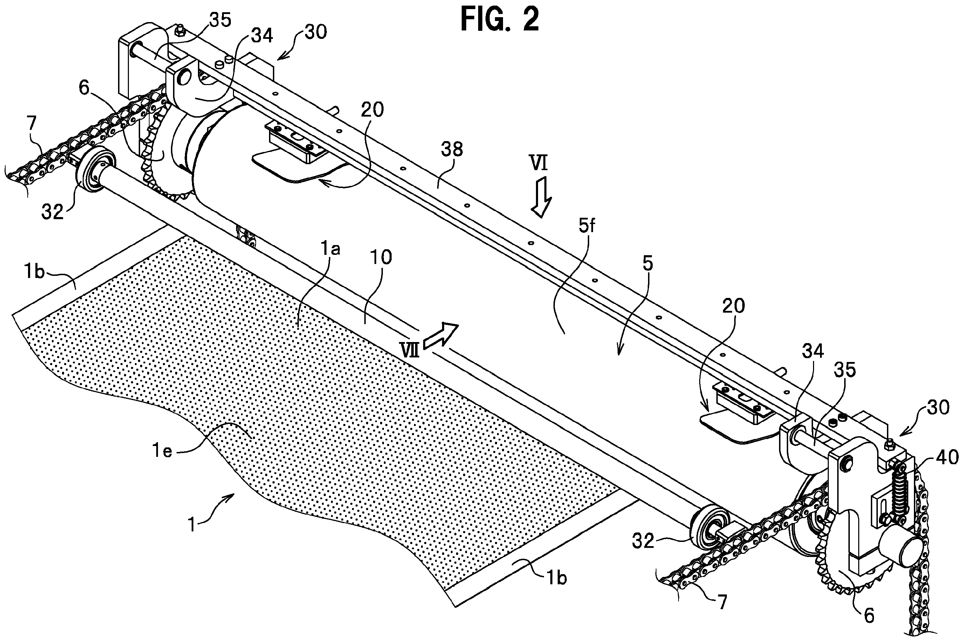

The web conveying device 100 conveys the web 1 in a strip shape fed from the feeder 2a to the winder 2b, along a conveying path. To this end, the web conveying device 100 has a first conveyer 3 located upstream in a conveying direction A of the web 1, followed by a second conveyer 4 located downstream. The first conveyer 3 has guide rollers 5a and guide rollers 5c each provided with a pair of right and left sprockets 6 engaging with chains 7 of the first conveyer 3, respectively. Note that the guide rollers 5a and guide rollers 5b of the second conveyer 4, to be described below, convey the web 1, but the guide rollers 5c and guide rollers 5d of the second conveyer 4, to be described below, do not convey the web 1. The first conveyer 3 may not be provided with a web pressing member 20 nor an interlocking member 30. Alternatively, the web pressing member 20 and interlocking member 30, to be described below, may be provided at either one of the guide rollers such as the guide roller 5a, as shown in FIG. 2.

Here, the second conveyer 4 is primarily described. The second conveyer 4 has the guide rollers 5b and guide rollers 5d. The guide rollers 5b each have the pair of right and left sprockets 6, engaging with the chains 7 of the second conveyer 4, attached to both ends of a rotary shaft thereof. The guide rollers 5b are each rotatably supported by the rotary shaft via bearings. The sprockets 6 are also rotatably supported by the rotary shaft via bearings. This causes the guide rollers 5b and the sprockets 6 to be freely rotated from each other with respect to the rotary shaft.

For example, when the web 1 is extended from upstream to downstream before processing, the sprockets 6 are rotated by a motor or manually. At this time, a web guiding member 10 is also moved by the chains 7 in the conveying direction. With the web 1 extending over, and abutting on, an outer periphery 5f of the guide roller 5b, the guide roller 5b is rotated by a frictional force from the web 1. Without the web 1 extending over the guide roller 5b, the guide roller 5b is not rotated. While the web 1 is being processed, once the web 1 is wound by the winder 2b and moved, the guide roller 5b is rotated by a frictional force from the web 1 over the guide roller 5b. Note that the chain 7 is used as a driving force transmission member and the sprocket 6 is used as a rolling wheel in the first embodiment, but a belt and a pulley may used in place of the chain 7 and the sprocket 6.

The web conveying device 100 includes the pair of right and left web pressing members 20, allowing the web 1 to extend through a gap between itself and the outer periphery of a guide roller 5 in FIG. 2, and the web guiding member 10 in a rod shape. The web guiding member 10 is placed between the pair of right and left chains 7 so as to be parallel to an axis of the guide roller 5, with a longitudinal direction thereof being perpendicular to a direction of itself being moved. The web guiding member 10 is used only at a stage prior to a processing step when a web roll is set in the feeder 2a and the web 1 is preliminarily extended from the feeder 2a to the winder 2b. To this end, right and left ends of the web guiding member 10 is linked with the right and left chains 7, respectively. The web guiding member 10 has a front edge 1a of the web 1 bonded thereto and preliminarily guides the web 1, as the chains 7 are driven, into a gap between a pressing surface of a pressing plate 21 and the outer periphery 5f of the guide roller 5b, in a guiding step prior to the processing step.

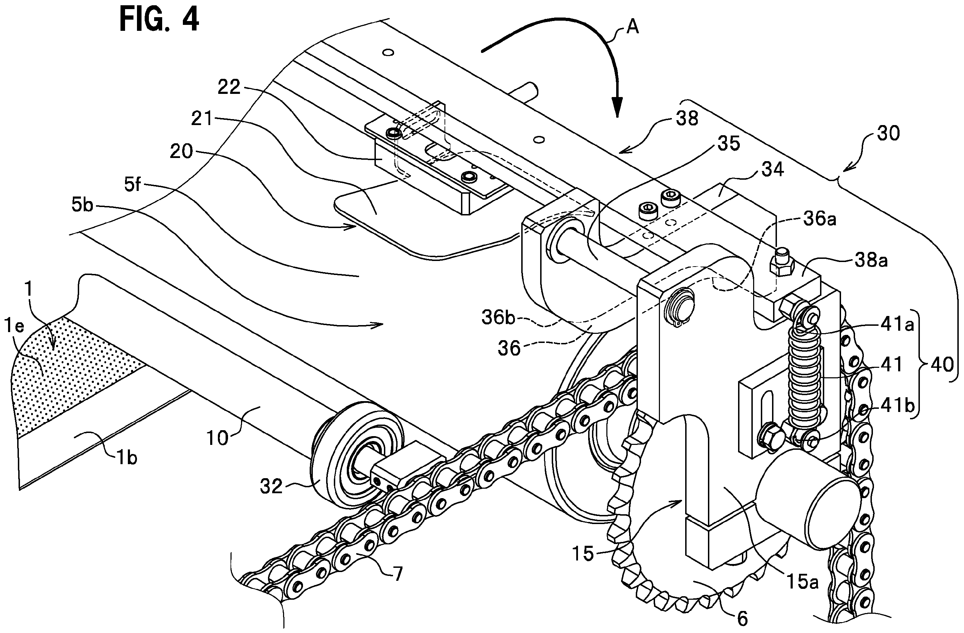

In addition, the web conveying device 100 includes the interlocking mechanism 30. As shown in FIG. 4, the interlocking mechanism 30 includes a cam roller member 32 rotatably attached to either end of the web guiding member 10, and a cam member 34 attached to a bearing member 15 in a plate shape, supporting the guide roller 5b axially and rotatably, so as to be swingable about a swing axis 35. The cam member 34 includes a roll surface 36 to have the cam roller member 32 abutted on the roll surface 36 so as to be rollable, and is attached to a support beam member 38, as a support, fixed to a top surface of a swung portion of the cam member 34 and supporting the web pressing member 20. The support beam member 38 is arranged so as to be longitudinally parallel to an axis of the guide roller 5b and is swung so as to be moved closer to or away from the outer periphery 5f of the guide roller 5b, as the cam members 34 are swung to which right and left ends thereof are respectively fixed.

The interlocking mechanism 30 further includes a force-exerting member 40. The force-exerting member 40 of the first embodiment is mainly composed of a spring 41 made of metal and one end 41a of the spring 41 is connected, via a fixed-to-cam axle, with an outer end 38a of the support beam member 38 attached to, and swung integrally with, the cam member 34. The other end 41b of the spring 41 is connected, via a fixed-to-bearing axle, with an outer surface 15a of the bearing member 15. This causes the force-exerting member 40 to exert a force so as to move the roll surface 36 of the cam member 34 closer to the outer periphery 5f of the guide roller 5b. The spring 41 is used as the force-exerting member 40 in the first embodiment, but the force-exerting member 40 can be any member that is expanded and contracted by elastic deformation, such as made of rubber, as far as a force is exerted to move the roll surface 36 closer to the outer periphery 5f.

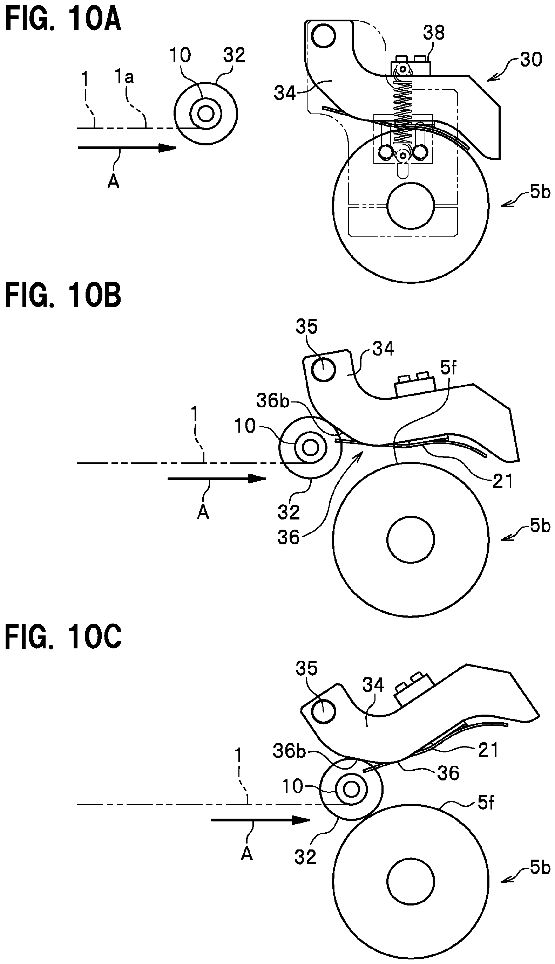

The cam roller member 32 and cam member 34 transmit a force of the web guiding member 10 moving in the conveying direction, along with the chains 7, to the web pressing members 20 and convert the force to a force of moving the web pressing members 20 away from the outer periphery 5f of the guide roller 5 due to the swinging. When the cam roller members 32 are free from abutting on the roll surfaces 36 of the cam members 34, there is no force to swing the cam members 34 so as to move the web pressing members 20 away from the outer periphery 5f of the guide roller 5. Accordingly, the support beam member 38 and the swung portions of the cam members 34 are swung by a force exerted by the force-exerting member 40 so as to moved closer to the outer periphery 5f, to return the web pressing members 20 to initial positions (see FIG. 10A).

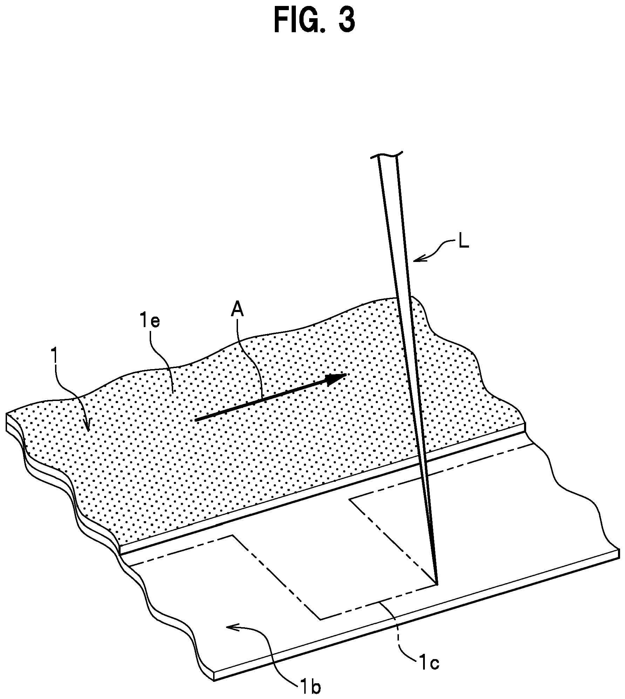

Further, the web conveying device 100 of the first embodiment has the laser processor 8 provided between the first conveyer 3 and second conveyer 4. The laser processor 8 includes an irradiator (not shown) having a Galvano scanner or the like. The irradiator irradiates at least one of right and left hems 1b of the web 1, moving at a high speed from the first conveyer3 toward the second conveyer 4, with laser beams L, as shown in FIG. 3, to cut the hem(s) into (a) rectangular, triangle, or trapezoidal shape(s). This forms one or more tabs 1c, each used as an electrode of a battery, on the hem(s) 1b of the web 1 at (a) desired interval(s).

The roll surface 36 of the cam member 34 according to the first embodiment has an extended portion 36a. The extended portion 36a is curved so as to follow a curved form of the outer periphery 5f of the guide roller 5b, and extends downstream in the conveying direction A of the web 1 continuously and seamlessly from a straight portion of the roll surface 36. The extended portion 36a serves to prolong a time of the cam roller member 32 abutting on the roll surface 36 to keep a force of swinging the cam member 34 so as to move the web pressing member 20 away from the outer periphery 5f of the guide roller 5, to prevent abrupt returning of the cam member 34.

The web pressing member 20 has a pressing plate 21 with a pressing surface curved so as to follow the outer periphery 5f of the guide roller 5b. The pressing plate 21 is fixed to the support beam member 38 via an attachment 22 attached to, on a surface facing the guide roller 5b of, the support beam member 38. An end portion located upstream in the conveying direction A of the pressing plate 21 is inclined, at a predetermined attack angle, so as to be increasingly moved away from the outer periphery 5f as extending upstream. This allows the web 1 to be smoothly guided into the gap between a pressing surface of the pressing plate 21 and the outer periphery 5f of the guide roller 5b, to reduce the web 1 leaving the outer periphery 5f and wrinkling.

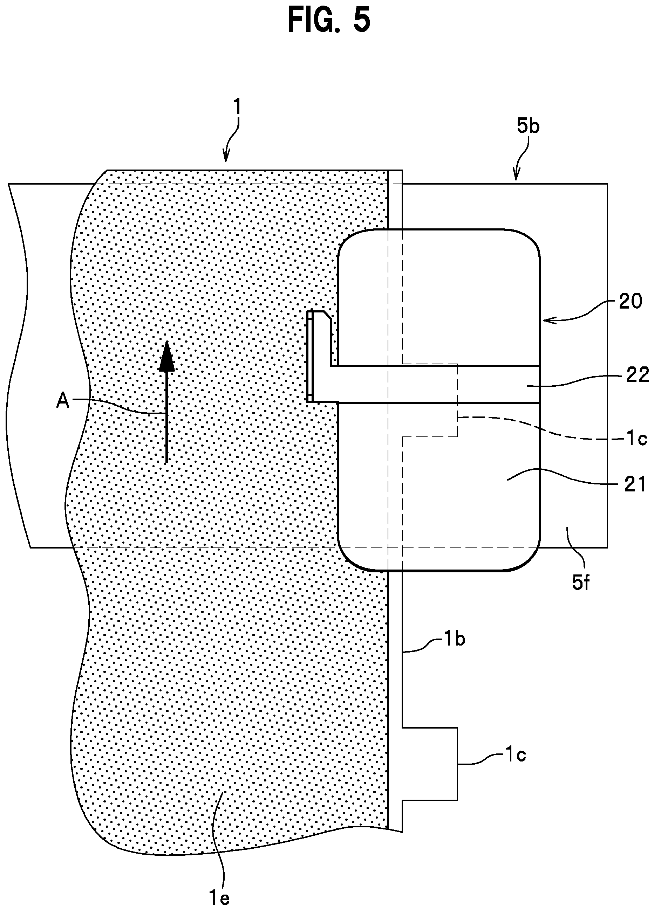

As shown in FIG. 5, while the web 1 extends through the gap between the pressing surface of the pressing plate 21 and the outer periphery 5f of the guide roller 5b, the pressing plate 21 presses the tab 1c in a convex shape, formed on the hem 1b of the web 1, so as to make the tab 1c contact the outer periphery 5f. This prevents the tab 1c from leaving, so as to be moved away from, the outer periphery 5f, when the conveying direction A of the tab 1c is changed to follow the curved form of the outer periphery 5f.

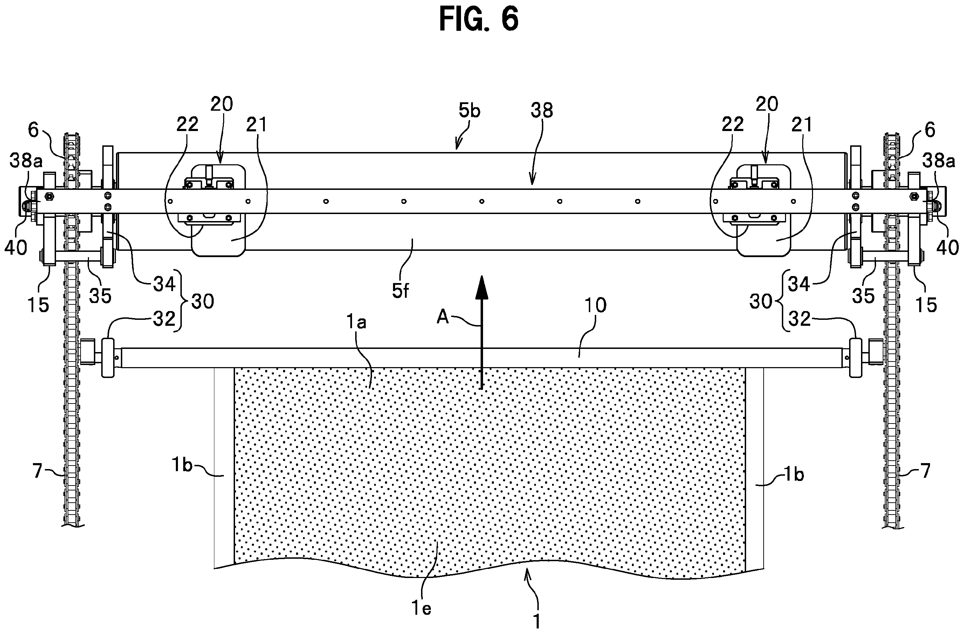

FIG. 6 is a plan view of the guide roller 5b, one of the guide rollers, as viewed in an arrowed direction VI in FIG. 2. Note that other guide rollers 5b each have substantially the same configuration, even though the web pressing member 20 and interlocking mechanism 30 may be differently angled, and thus descriptions thereof are omitted. The web conveying device 100 of the first embodiment includes a pair of the right and left web pressing members 20 having a lateral end surface curved substantially in an S-shape. The web pressing members 20 are fixed via a pair of the right and left attachments 22 attached to, on the surface facing the guide roller of, the elongated support beam member 38, longitudinally at a predetermined distance so as to be bilaterally symmetrical. The support beam member 38 has the right and left outer ends 38a attached to top surfaces of the cam members 34 provided on either side of the guide roller 5b, and is arranged so as to be parallel to the rotary shaft of the guide roller 5b.

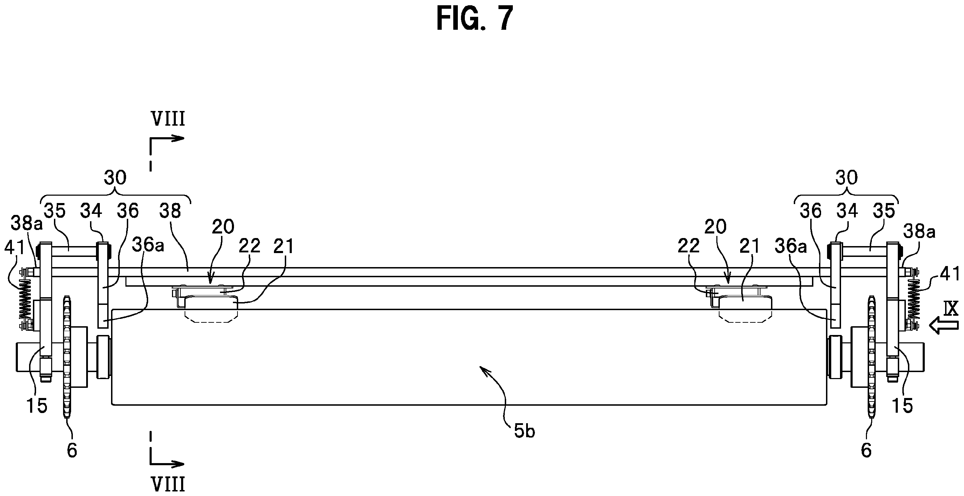

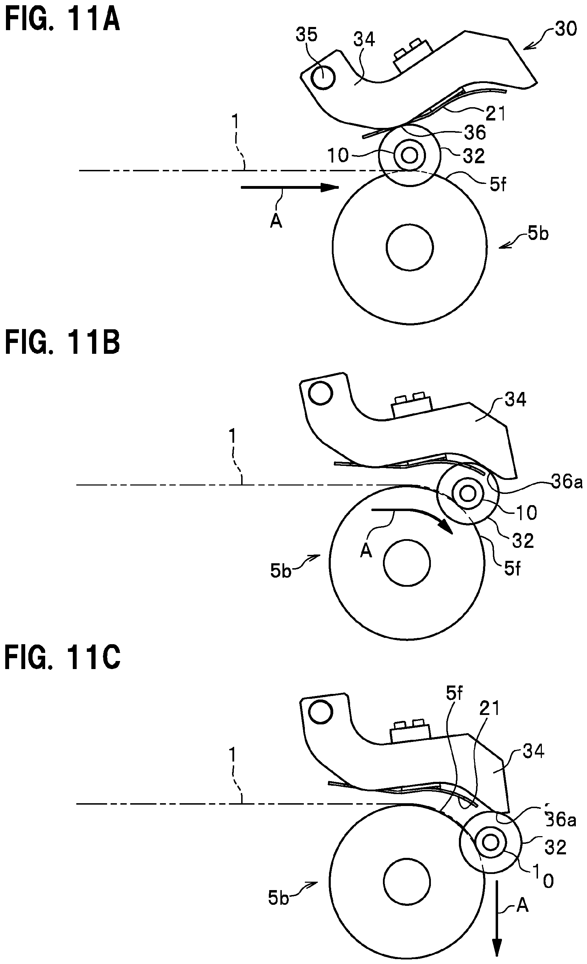

FIG. 7 is a front view of the guide roller 5b, as viewed from front in an arrowed direction VII in FIG. 2. The cam members 34 are each swung about the swing axis 35 (see FIGS. 10A to 10C and 11A to 11C). With the cam members 34 being swung, the right and left web pressing members 20 supported by the support beam member 38 are concurrently moved away from or closer to the outer periphery 5f of the guide roller 5b. This allows the gap between the pressing surface of the pressing plate 21 and the outer periphery 5f of the guide roller 5b to be varied in size. The gap can be enlarged or lessened from a size to allow only the web 1 to extend therethrough to a size to allow the web 1 and web guiding member 10 to extend/pass therethrough.

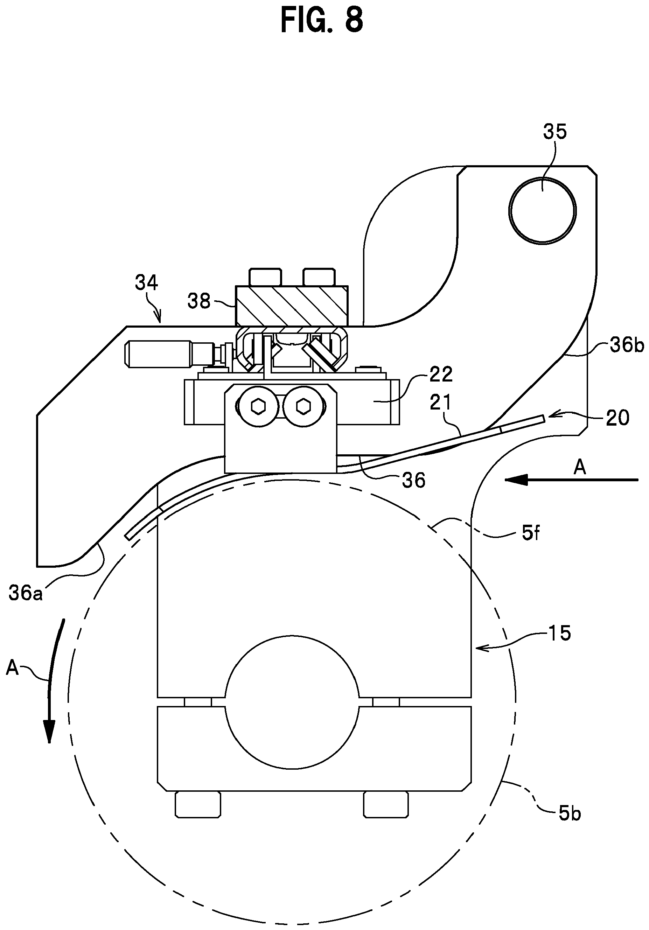

As shown in FIG. 8, the roll surface 36 of the cam member 34 is continuously formed to have the extended portion 36a on a downstream side and a guiding slope 36b on an upstream side in the conveying direction A, so as to have a substantially S-shape in a lateral view. Here, the extended portion 36a extends downstream in the conveying direction A and is curved to follow a curved form of the outer periphery 5f. This causes the cam member 34 to be gradually swung so as to be moved closer to the outer periphery 5f, even when the conveying direction A of the cam roller member 32 rolling on the roll surface 36 is changed right after the web guiding member 10 has passed through the gap (see FIG. 11C). This prevents the pressing plate 21 from abruptly coming closer to, and such as colliding with, the outer periphery 5f of the guide roller 5b, to protect the web 1 and outer periphery 5f.

The guiding slope 36b extends upstream in the conveying direction A, and is inclined at a predetermined angle so as to increasingly come away from the outer periphery 5f as extending upstream. This allows the web 1 to be guided in the conveying direction A into, and smoothly extend through, the gap between the cam member 34 and the outer periphery 5f.

The interlocking mechanism 30 converts, via the cam roller member 32, cam member 34, and support beam member 38, a force of the web guiding member 10 moving in the conveying direction A, along with the chains 7, to a force, acting in a direction substantially perpendicular to that of the previously mentioned force, of moving the web pressing members 20 away from the outer periphery 5f of the guide roller 5b. The pressing plate 21 is swung about the swing axis 35 by the converted force, to enlarge the gap between the pressing surface and the outer periphery 5f. The pressing plate 21 of the web pressing member 20 is also moved by a force exerted by the force-exerting member 40, in a curve suggestive of an arc about the swing axis 35, toward the outer periphery 5f of the guide roller 5b. Once the cam member 34 has returned to an initial position, the pressing plate 21 is moved toward the outer periphery 5f, to allow the web 1 to extend through the gap between the pressing surface and the outer periphery 5f of the guide roller 5b.

### [Guiding Step]

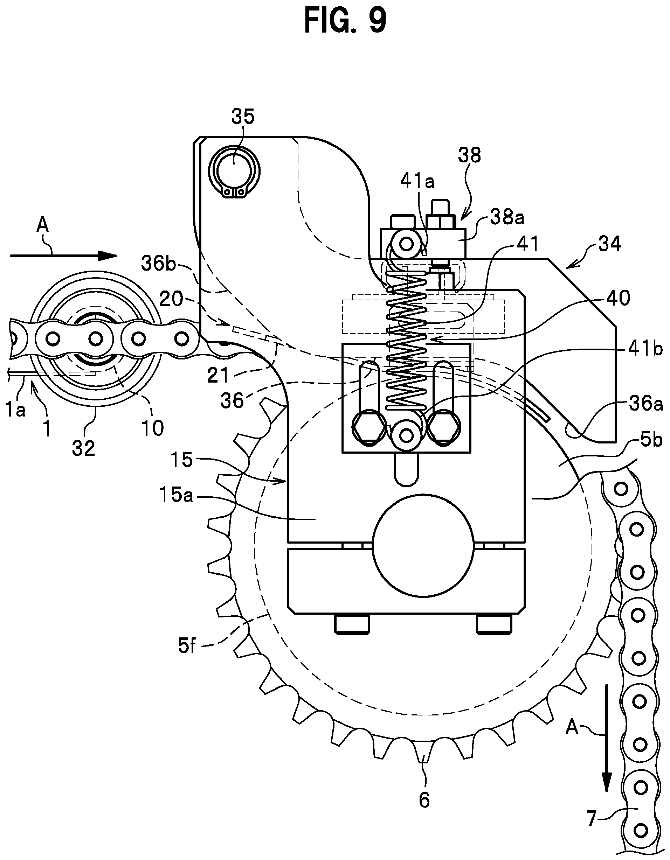

Next, a description is given of advantageous effects of the web conveying device 100 of the first embodiment, using FIGS. 9 to 13. First, a guiding step is described in which the web 1 is preliminarily guided into the conveying path in the web conveying device 100 at a stage prior to processing the web 1. The sprocket 6 in FIG. 9 is rotated by a rotational driving force of a power unit (not shown), such as a motor, (or manually through a handle or the like). With the sprocket 6 being rotated, the chain 7 engaged with teeth of the sprocket 6 is moved through the first conveyer 3 and second conveyer 4 (see FIG. 1). The web guiding member 10, arranged between the pair of chains 7 so as to be perpendicular to the chains, has the front edge 1a of the web 1 bonded thereto and holds the web 1 (see FIG. 2). Accordingly, the web 1 moves through the first conveyer 3 and second conveyer 4, as the chains 7 are moved, while being tensioned by the web guiding member 10.

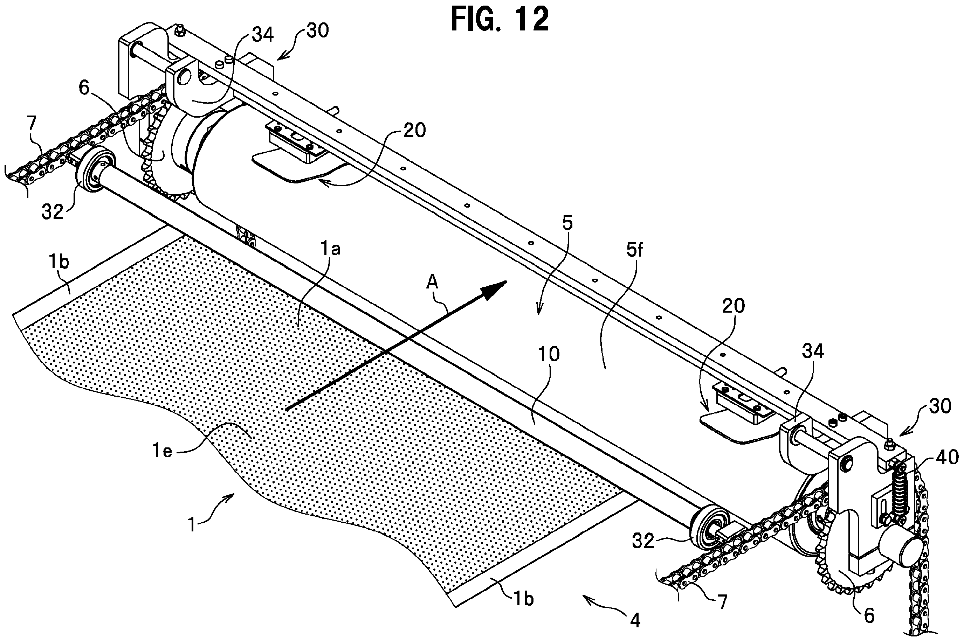

FIG. 10A shows the cam roller member 32 moving through the second conveyer 4, prior to abutting on the cam member 34 (see FIG. 12). In the second conveyer 4 of the web conveying device 100 according to the first embodiment, the web guiding member 10 moves in the conveying direction A, as the chains 7 (see FIG. 12) are moved. The web guiding member 10 is moved closer to the guide roller 5b, while tensioning the web 1 by the front edge 1a, to guide the web 1 into the gap between a portion, positioned atop, of the outer periphery 5f of the guide roller 5b and the web pressing member 20.

FIG. 10B shows the cam roller member 32 of the interlocking member 30 abutting on the cam member 34, as the web guiding member 10 has moved in the conveying direction A. Once an outer rim of the cam roller member 32 abuts on the guiding slope 36b, formed in the roll surface 36 of the cam member 34 so as to be inclined at a predetermined angle, the cam member 34 is swung about the swing axis 35 and flipped up. This starts enlarging the gap between the pressing surface of the pressing plate 21 and the outer periphery 5f of the guide roller 5b.

FIG. 10C shows the cam roller member 32 having further moved in the conveying direction A to cause the cam roller members 32 to roll along the roll surface 36 of the cam member 34 to increase an amount of the cam member 34 being swung. As a result, the gap between the pressing surface of the pressing plate 21 and the outer periphery 5f is enlarged to a size to allow the web guiding member 10 to pass therethrough.

FIG. 11A shows the web guiding member 10 passing through the enlarged gap between the outer periphery 5f and the web pressing member 20. The web guiding member 10 can pass through the enlarged gap, while tensioning the web 1, in accordance with the cam members 34 being swung, without interfering with the guide roller 5b and the flipped-up web pressing members 20.

FIG. 11B shows the cam roller member 32 moving in the conveying direction A through the gap and abutting on the extended surface 36a extended from the roll surface 36 of the cam member 34. During the moving, when the web guiding member 10 has the conveying direction A changed downward, in the drawing, by substantially 90 degrees, as the chains 7 (not shown) are moved, the cam roller members 32 continue to roll along the extended surface 36a. This controls a swing angle of the flipped-up cam member 34 being decreased, when returning to an initial position, to avoid abrupt decreasing of the gap between the outer periphery 5f and the web pressing member 20.

FIG. 11C shows the cam roller member 32 being positioned at an end point of the extended surface 36a of the cam member 34. At this time, the web 1 has extended through the gap and is wound, while abutting, on the outer periphery 5f of the guide roller 5b and interposed between the pressing plate 21 and the outer periphery 5f. The extended surface 36a has the end point located on a surface curved downstream in the conveying direction A of the web 1. This allows the cam member 34 of the first embodiment to gradually move the pressing plate 21 closer to the outer periphery 5f, as compared such as with a cam member composed of a flat roll surface 36 extending straight to an end point. Accordingly, the web conveying device 100 of the first embodiment has the cam member 34 preventing the gap from being abruptly decreased, when flipped-up, even with the pressing plate 21 moved closer to the outer periphery 5f by a force exerted by the force-exerting member 40. The web 1 and the outer periphery 5f or pressing plate 21 are thus protected from being broken or the like.

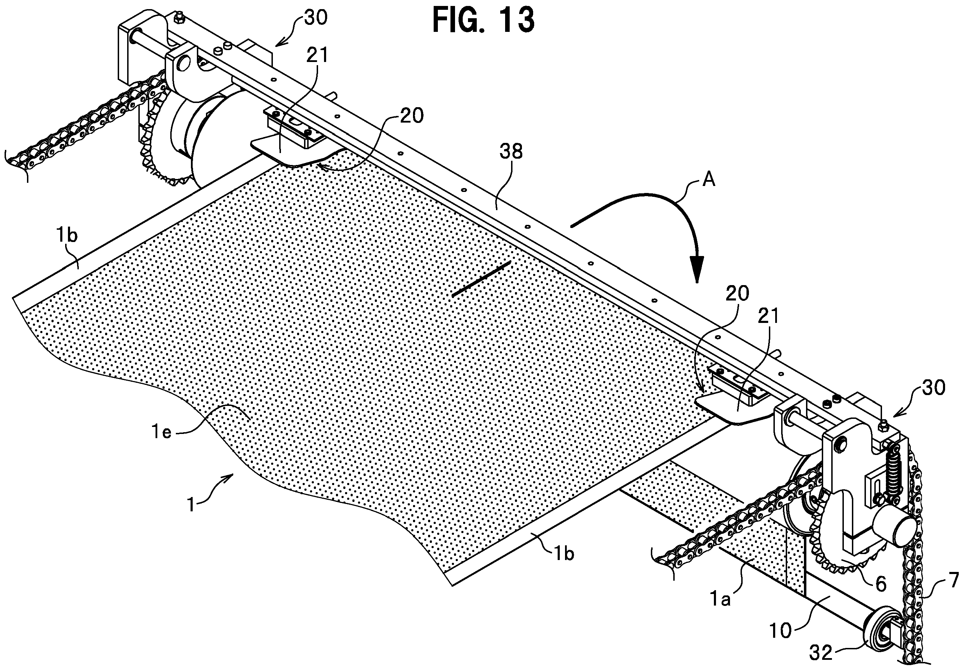

As shown in FIG. 13, the web guiding member 10 has the conveying direction A changed downward at the guide roller 5b, and then moves to a place in vicinity to the guide roller 5c or 5d in FIG. 1 and not affecting the processing step. The gaps between the guide roller 5b and the web pressing members 20 are decreased after the web guiding member 10 has passed therethrough. This allows the web 1 to extend through the gaps in the subsequent processing step, with the pressing plates 21 of the web pressing members 20 pressing the web 1 to the outer periphery 5f. As shown in FIG. 5, the tab 1c protruding from the hem 1b has a convex rectangular shape and is in a portion of the web 1 where an active material layer 1e is not formed. The tab 1c is thinner and more fragile than other portions of the web 1 where the active material layer 1e is layered. The web conveying device 100 of the first embodiment, in the processing step, has the web pressing members 20 returned to the initial positions by forces exerted by the springs 41. When the web pressing members 20 have returned, the pressing plates 21 are each moved to the outer periphery 5f, to define a gap between itself and the outer periphery 5f of the guide roller 5b, having a size to allow the web 1 to extend through the gap. This prevents the hem 1b, including the tabs 1c, from leaving the outer periphery 5f, even with the hem 1b being bent to follow the outer periphery 5f, when the conveying direction A is changed, to have the hem 1b unlikely curled.

In addition, the web conveying device 100 presses the right and left hems 1b, with respect to a longitudinal direction, of the web 1, with the pressing surfaces of the pressing plates 21 of the web pressing members 20, as shown in FIG. 13. The right and left web pressing members 20 are supported by the single support beam member 38. Additionally, rotation centers of the pair of right and left sprockets 6 are coaxial with the rotary shaft of the guide roller 5b, to allow the pair of chains 7 to be moved in synchronization at a constant speed, readily with same rotation speed as that of the guide roller 5b. This allows the cam roller members 32 attached to right and left ends of the web guiding member 10 to concurrently abut on, and swing at the same angle, the right and left cam members 34. Accordingly, the support beam member 38 concurrently moves the pair of right and left web pressing members 20 away from or closer to the outer periphery 5f of the guide roller 5b, through swinging of the cam members 34 fixed to the respective outer ends 38a. This allows both of the gaps between the pressing surfaces of the right and left pressing plates 21, independently formed from each other, and the outer periphery 5f of the guide roller 5b, to be varied in size to allow the web 1 to extend through, to prevent the web 1 from leaving the outer periphery 5f and wrinkling.

### [Processing Step]

Next, a processing step is described in which the web 1 is processed by the tab former including the web conveying device 100 of the first embodiment. The web 1 guided into the web conveying device 100 has the front edge 1a threaded to the winder 2b, and is then processed while being wound by the winder 2b and thus moved in the conveying direction A. Note that the web guiding member 10 is displaced, during the processing step, to a point in vicinity to the guide rollers 5c, 5d in FIG. 1 and not affecting to the processing step. Additionally, the chains 7, sprockets 6, and web guiding member 10 are not moved to remain stopped and unused, during the processing step.

The first conveyer 3 adjusts tension of the web 1 fed from the feeder 2a, for laser processing, and adjusts positioning to avoid the web 1 from being weaved. While the web 1 is moved from the first conveyer 3 to the second conveyer 4, the tabs 1c in a convex shape are suitably formed on the hem 1b of the web 1, at a point between the first conveyer 3 and second conveyer 4, through irradiation with the laser beams L from the laser processor 8. In the first embodiment, the longitudinal hem 1b of the web 1 is where the active material layer 1e is not formed (see FIG. 3). The tab 1c formed in the hem 1b does not have the active material layer 1e, either. Therefore, the hem 1b and tab 1c are thinner and more fragile than other portions of the web 1 where the active material layer 1e is layered, and are deformable, resulting in being likely curled or wrinkled when the conveying direction A is changed by the guide roller 5b.

Once the tab 1c formed in the web 1 reaches the guide roller 5b, the hem 1b including the tab 1c is then made to pass through the gap between the outer periphery 5f of the guide roller 5b and the web pressing members 20. The gap has been narrowed merely to allow the web 1 to extend through, because the cam member 34 has returned to the initial position due to a force exerted by the force-exerting member 40. Accordingly, in the processing step, the pressing plate 21 allows the web 1 to extend through the gap between itself and the outer periphery 5f of the guide roller 5b, while pressing the web 1 to the outer periphery 5f. The tab 1c formed in the hem 1b of the web 1 is unlikely curled and wrinkled, even with the conveying direction A changed by the guide roller 5b.

As described above, the web conveying device 100 of the first embodiment includes, as shown in FIG. 1: the guide roller 5b to support and guide the web 1 in a strip shape; the pressing member 20 to allow the web 1 to extend through the gap between itself and the outer periphery 5f of the guide roller 5b; and the sprocket 6 attached to the rotary shaft of the guide roller 5b. In addition, the web conveying device 100 includes: the chain 7 engaging with the sprocket 6 and driven in the conveying direction A of the web 1; and the web guiding member 10 having the front edge 1a of the web 1 threaded thereinto and driven by the chain 7 to guide the web 1 into the gap. Further, the web conveying device 100 includes: the cam roller member 32 attached to the web guiding member 10; and the cam member 34 to abut on the cam roller 32 and move the web pressing member 20 away from the outer periphery 5f. Furthermore, the web conveying device 100 includes: the interlocking mechanism 30 to transmit a force of the web guiding member 10 moving in the conveying direction A, along with the chains 7, to the web pressing member 20 and convert the force to a force of moving the web pressing member 20 away from the outer periphery 5f of the guide roller 5b.

The present disclosure provides the web conveying device to timely drive the web pressing members 20 with a simple structure to reduce manufacturing costs. In particular, a force of the web guiding member 10 being moved in the conveying direction, along with the chains 7, is used to move the web pressing members 20 away from the outer periphery 5f of the guide roller 5. In this manner, moving the chains 7 causes, at a timing of approaching, the web pressing members 20 to be moved away from the outer periphery 5f, to allow the web guiding member 10 to pass through the enlarged gaps, without interfering with the web pressing members 20.

This requires no actuators to retreat the web pressing member 20 with a driving force other than a force used for conveying the web, as with a conventional web conveying device. Additionally, timing of retreating the web pressing members 20 is readily synchronized with timing of the web guiding member 10 passing through the gap, without using any detection parts such as a sensor. Therefore, the web conveying device 100 accomplishes practically advantageous effects to allow for reducing the number of parts of one or more actuators and one or more detection parts, such as a sensor, to simplify the structure and reducing manufacturing costs.

In addition, the web conveying device 100 includes the laser processor 8 provided between the first conveyer 3 and second conveyer 4, as shown in FIG. 1, to irradiate the hem 1b (see FIG. 3) of the web 1 with laser beams to form the one or more tabs 1c. This prevents the web 1 from leaving the outer periphery 5f and wrinkling, even with the hem 1b of the web 1 irradiated with laser beams by the laser processor 8, to form the one or more tabs 1c at high speed. Accordingly, the web conveying device 100 allows for further improving production efficiency to reduce manufacturing costs.

Further, the sprocket 6a is used as a rolling wheel, and the chain 7 engaging with the sprocket 6 is used as a belt. Accordingly, a rotational driving force of the sprocket 6 is converted to a force of moving the chain 7 reliably meshed and engaged with teeth of the sprocket 6. Moving the web guiding member 10 is readily synchronized with moving the web pressing members 20, via the interlocking mechanism 30, away from or closer to the outer periphery 5f of the guide roller 5b.

Still further, the interlocking mechanism 30 includes the cam roller member 32 rotatably attached to either end of the web guiding member 10, and the cam member 34 axially supported by the bearing member 15 of the guide roller 5b so as to be swingable. The cam member 34 is provided with the roll surface 36 to cause the cam roller member 32 to abut thereon so as to be rollable, and the support beam member 38 supporting the web pressing member 20. This causes the cam roller member 32 to abut on the cam member 34 and roll along the roll surface 36, in accordance with movement of the web guiding member 10, to swing the cam member 34. In this manner, the cam member 34 moves the web pressing members 20, via the support beam member 38, away from or closer to the outer periphery 5f of the guide roller 5b.

The interlocking mechanism 30 further includes the force-exerting member 40 having one end 41a connected with the cam member 34 and the other end 41b connected with the bearing member 15, and exerting a force so as to move the roll surface 36 closer to the outer periphery 5f of the guide roller 5b. The interlocking mechanism 30 also has the extended portion 36a made with the roll surface 36 extended and curved downstream in the conveying direction A to follow the outer periphery 5f of the guide roller 5b. Accordingly, the web pressing member 20 has a force exerted by the force-exerting member 40, via the cam member 34, so as to be moved toward the outer periphery 5f of the guide roller 5b. This secures a certain size of the gap between the pressing surface of the web pressing member 20 and the outer periphery 5f of the guide roller 5b. The web 1 extended through the gap between the pressing surface of the pressing plate 21 and the outer periphery 5f of the guide roller 5b is thus conveyed to follow the outer periphery 5f of the guide roller 5b and reliably prevented from leaving the outer periphery 5f and wrinkling.

The extended portion 36a made with the roll surface 36 extended is curved downstream in the conveying direction A to follow the outer periphery 5f of the guide roller 5b. This allows the pressing plate 21 to be gradually moved closer to the outer periphery 5f, until the web 1 having the conveying direction A changed while being reliably interposed in the gap. Accordingly, the gap is prevented from being abruptly decreased, even with the pressing member 20 being returned toward the outer periphery 5f using a force exerted by the force-exerting member 40. The web 1 and the outer periphery 5f or pressing plate 21 are thus protected from being broken or the like.

### Second Embodiment

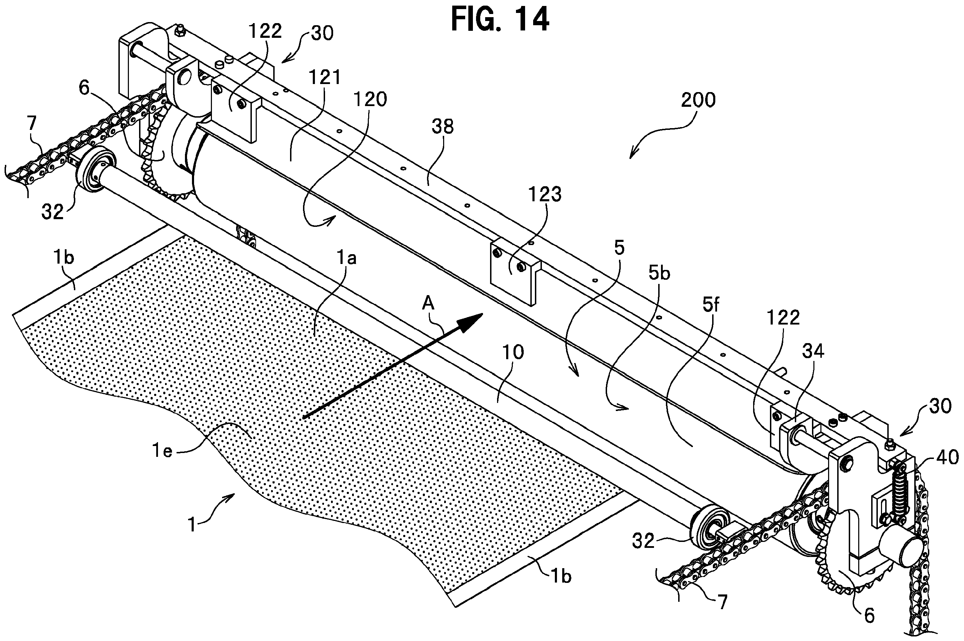

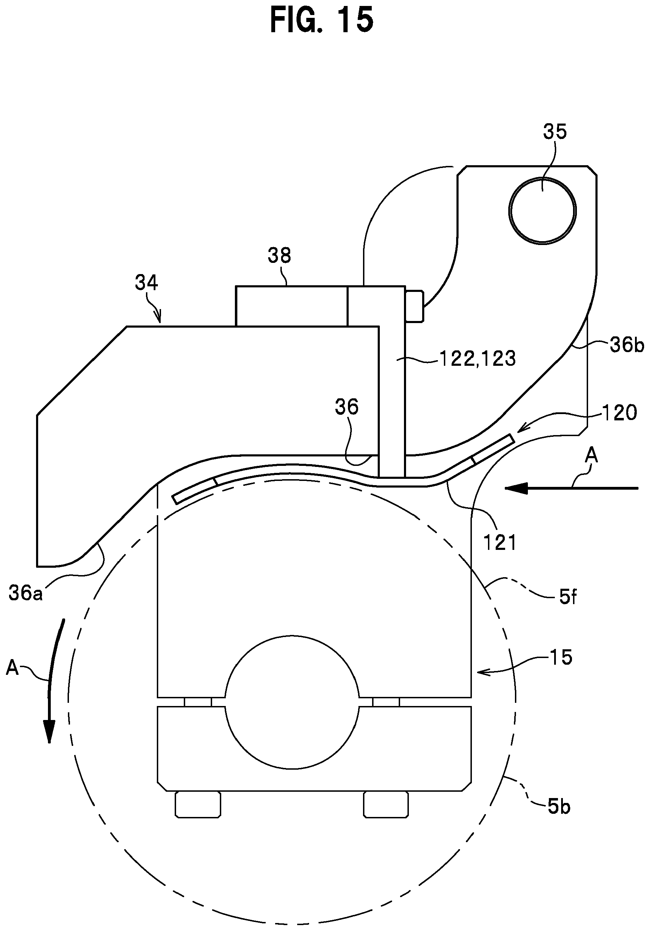

FIGS. 14 and 15 each show major components of a web conveying device 200 according to a second embodiment. Note that the same or equivalent components as/to those of the web conveying device 100 according to the first embodiment are denoted by identical reference signs in the second embodiment, with descriptions thereof omitted, and a description is primarily focused on differences.

As shown in FIG. 14, the web conveying device 200 has an elongated web pressing member 120 having substantially the same width as a width in an axial direction of the outer periphery 5f of the guide roller 5b, extending in longitudinal directions of, so as to be parallel to, the guide roller 5b and support beam member 38. The web pressing member 120 of the second embodiment is fixed to the support beam member 38 at three points, using a pair of right and left attachments 122 attached to, on a surface facing the guide roller of, the support beam member 38 and a center attachment 123 located right between the attachments 122.

As shown in FIG. 15, a side edge face of a pressing plate 121 of the web pressing member 120 is curved in a substantially S-shape, as with the pressing plate 21 (see FIG. 8) of the first embodiment. The pressing plate 121 is formed to have the same substantially S-shape in longitudinal cross-section at any point in a longitudinal direction thereof. The web pressing member 120, supported by, on a side closer to the guide roller 5b of, the support beam member 38, has the gap between the pressing surface of the pressing plate 121 and the outer periphery 5f of the guide roller 5b varied in size, in accordance with the cam member 34 being swung.

Here, the pressing plate 121 of the second embodiment is supported by the support beam member 38 via the attachments 122 and center attachment 123 longitudinally at three points. This allows for maintaining gap sizes, longitudinally at any points of the pressing plate 121, so as to be equal to one another. Accordingly, the pressing plate 121 has no risk of being partly moved closer to the outer periphery 5f, due to inclining or degree of attachment being decreased, to cause the web guiding member 10 to abut thereon. In the guiding step, the gap is enlarged or lessened from a size to allow only the web 1 to extend therethrough to a size to allow the web guiding member 10 to pass therethrough.

In the processing step, when the web 1 is extended through the gap defined between the outer periphery 5f of the guide roller 5b and the pressing plate 121, the web 1 is pressed to the outer periphery 5f by the pressing surface of the pressing plate 121, elongated laterally in a width direction, equally at any points. This prevents the whole web 1 equally at any points laterally in the width direction from leaving the outer periphery 5f and wrinkling, in addition to preventing the tab 1c in the hem 1b from leaving the outer periphery 5f. Other components and advantageous effects of the web conveying device 200 are the same as those of the web conveying device 100 according to the first embodiment, and thus descriptions thereof are omitted.

Hereinabove, the present invention has been described based on the first and second embodiments, but the present invention is not limited thereto. The present invention can be modified as required within the scope thereof, inclusive of combining or selecting components described in the first and second embodiments. Additionally, the components of the first and second embodiments may partly be removed, or be added/replaced with other components. Possible modifications of the first and second embodiments include following cases.

That is, the web conveying devices 100 and 200 of the first and second embodiments each have the interlocking mechanisms 30 provided between both ends of the guide roller 5b and web pressing member 20 or 120 in the second conveyer 4, but the present invention is not limited thereto. For instance, the interlocking mechanisms 30 may be provided at the guide rollers 5a, 5c in the first conveyer 3 and the guide rollers 5b in the second conveyer 4, so as to be adjusted to the form of the web 1, or may be provided only at either one of both ends of the guide rollers 5a to 5d. In addition, the interlocking mechanism 30 only needs to transmit a force of the web guiding member 10 moving in the conveying direction, along with the chains 7, to the web pressing member 20 and convert the force to a force of moving the web pressing member 20 away from the outer periphery 5f of the guide roller 5. In other words, the interlocking mechanisms 30 are not specifically limited in quantity, shape, or combination of components.

### List of Reference Signs

1: web, 5b: guide roller, 6: sprocket, 7: chain, 10: web guiding member, 20: web pressing member, 32: cam roller member, 34: cam member, and 100; 200: web conveying device.

## Claims

1. A web conveying device (100; 200) comprising:
a guide roller (5; 5b) to support and guide a web (1) in a strip shape;
a web pressing member (20; 120) to allow the web (1) to extend through a gap between itself and an outer periphery (5f) of the guide roller (5; 5b);
a sprocket (6) attached to a rotary shaft of the guide roller (5; 5b);
a chain (7) engaging with the sprocket (6) and driven in a conveying direction (A) of the web (1);
a web guiding member (10) having a front edge (1a) of the web (1) threaded thereinto and driven by the chain (7) to guide the web (1) into the gap;
a cam roller member (32) attached to the web guiding member (10); and
a cam member (34) abutted on the cam roller member (32) to move the web pressing member (20; 120) away from the outer periphery (5f).

2. The web conveying device according to claim 1, wherein
the cam roller member (32) is rotatably attached to either end of the web guiding member (10),
the cam member (34) is attached via a swing axis (35) to a bearing member (15) axially supporting the guide roller (5, 5b), wherein the swing axis (35) is supported by the bearing member (15), and
the cam member (34) has a roll surface (36) on which the cam roller member (32) is rolled to cause the web pressing member (20; 120) to be swung about the swing axis (35).

3. The web conveying device according to claim 2, further comprising:
a force-exerting member (40) exerting a force so as to move the cam member (34) closer to the guide roller (5; 5b),
wherein the roll surface (36) is formed to have an extended portion (36a) curved in the conveying direction (A) of the web (1) to follow the outer periphery (5f).

4. The web conveying device according to claim 1, further comprising:
a support beam member (38) supporting the web pressing member (20; 120),
wherein the support beam member (38) is arranged so as to be longitudinally parallel to an axis of the guide roller (5; 5b) and has right and left ends thereof fixed a top surface of a swung portion of the cam member (34), to cause a pressing surface of the web pressing member (20; 120) to be swung so as to be moved closer to or away from the outer periphery (5f) of the guide roller (5; 5b), as the cam member (34) is swung.
